# EUROPEAN PATENT APPLICATION

(11) **EP 2 048 729 A1**
(43) Date of publication of application: **15.04.2009**
(21) Application number: 07791525.4
(22) Date of filing: 24.07.2007
(51) Int. Cl.: H01M 8/02

(54) **ASSEMBLY FOR FUEL CELL, FUEL CELL, AND METHOD FOR MANUFACTURING FUEL CELL**

(30) Priority: 24.07.2006 JP 2006200689
(71) Applicant: Toyota Jidosha Kabushiki Kaisha, Toyota-shi, Aichi 471-8571 (JP)
(72) Inventor: OKUMURA, Masao, Toyota-shi, Aichi 471-8571 (JP); KADOTANI, Satoshi, Toyota-shi, Aichi 471-8571 (JP); KAWAHARA, Tatsuya, Toyota-shi, Aichi 471-8571 (JP); HATANAKA, Tatsuya, Aichi-gun, Aichi 480-1192 (JP)
(74) Representative: Kuhnen & Wacker
(86) International application number: PCT/JP2007/064831
(87) International publication number: WO 2008/013293

(57) **Abstract**

Disclosed is a fuel cell wherein deterioration of fuel cell performance due to dry up phenomenon and flooding phenomenon is suppressed. Specifically disclosed is an assembly for fuel cells or a fuel cell wherein a catalyst layer contains a first composite catalyst particle containing a catalyst supporting particle and a solid polymer electrolyte and a second composite catalyst particle having a larger volume average particle diameter than the first composite catalyst particle and arrangement of the first composite catalyst particle and the second composite catalyst particle is controlled in the thickness direction of the catalyst layer. Consequently, deterioration of fuel cell performance due to dry up phenomenon or flooding phenomenon can be suppressed, thereby realizing a fuel cell with high efficiency.

## Description

### TECHNICAL FIELD

The present invention relates to an assembly for a fuel cell, a fuel cell, and a method for manufacturing the fuel cell.

### BACKGROUND ART

Fuel cells, which generate electricity by converting chemical energy to electrical energy via an electrochemical reaction that uses, as raw materials, an oxidizing gas such as oxygen or air, and a reducing gas (a fuel gas) such as hydrogen or methane or a liquid fuel such as methanol are attracting considerable attention as one possible countermeasure to environmental problems and resource problems. In a fuel cell, a fuel electrode (an anode catalyst layer) provided on one surface of an electrolyte membrane and an air electrode (a cathode catalyst layer) provided on the other surface are disposed facing one another across the electrolyte membrane, a diffusion layer is provided on the outside of each of these catalyst layers that sandwich the electrolyte membrane, and these diffusion layers are sandwiched between separators that are provided with raw material supply passages, and electricity is then generated by supplying the raw materials such as hydrogen and oxygen to each of the catalyst layers.

During power generation using a fuel cell, if the rawmaterial supplied to the fuel electrode is hydrogen gas and the raw material supplied to the air electrode is air, then at the fuel electrode, hydrogen ions and electrons are generated from the hydrogen gas. The electrons travel from an external terminal and through an external circuit, before reaching the air electrode. At the air electrode, the oxygen within the supplied air, the hydrogen ions that have passed through the electrolyte membrane, and the electrons that have traveled through the external circuit to reach the air electrode generate water. In this manner, chemical reactions occur at both the fuel electrode and the air electrode, and an electrical charge is generated, enabling the structure to function as an electric cell. Because the raw material gases and/or liquid fuels used for power generation are abundant, the material discharged as a result of the power generation is water, or the like, this type of fuel cell is being widely investigated as a potential clean energy source.

The catalyst layers of the fuel cell usually comprise catalyst-supporting particles such as a catalyst-supporting carbon having platinum (Pt) or the like supported thereon, and a resin such as a solid polymer electrolyte.

In this type of fuel cell, deterioration in the fuel cell performance due to the dry-up phenomenon, in which the electrolyte membrane lacks moisture, or the flooding phenomenon, in which the generated water inhibits supply of the raw materials such as the oxygen and hydrogen, may be problematic, and a variety of investigations are being conducted in attempts to improve factors such as the fuel cell structure and the fuel cell catalyst used for the electrodes. In other words, in order to improve the power generation performance of the fuel cell, it is necessary to ensure smooth raw material supply and smooth discharge of generated water.

For example, JP 2005-243622 A discloses a method of manufacturing a membrane-electrode assembly for a solid polymer electrolyte fuel cell that includes forming the catalyst layer from two layers, namely a first catalyst layer and a second catalyst layer having a particle diameter that is relatively smaller than that of the first catalyst layer, by applying and then drying the first catalyst layer on the gas diffusion layer, and subsequently applying and drying the second catalyst layer over the top of the first catalyst layer.

Furthermore, JP 2005-116416 A discloses a fuel cell in which the carbon particle diameter in the catalyst layer is larger on the side of the diffusion layer, and smaller on the side of the electrolyte membrane.

Moreover, JP 2003-303596 A discloses a polymer electrolyte fuel cell in which the catalyst layer is formed as a multilayer structure, and in particular, the catalyst layer that contacts the electrolyte membrane is formed as a dense layer, whereas the catalyst layer that contacts the diffusion layer is formed as a sparse layer.

Furthermore, JP 08-162123 A discloses an electrochemical cell in which an anode collector, an anode catalyst layer, a polymer electrolyte membrane, a cathode catalyst layer, and a cathode collector are laminated in sequence, wherein the particle diameters of the aggregate catalyst particles within at least one of the two catalyst layers are distributed so as to become smaller with increasing proximity to the polymer electrolyte membrane and larger with increasing proximity to the collector.

Furthermore, JP 02-18861 A discloses an electrode catalyst layer for a fuel cell that includes catalyst particles having a particle size gradient such that the particle diameter of the catalyst particles is larger on the side of the electrode base material and smaller on the side of the electrolyte layer.

Moreover, JP 3098219 B discloses a solid polymer fuel cell catalyst containing a metal catalyst supported on carbon, wherein the metal catalyst is composed of a mixture of materials having different average particle diameters, and the average particle diameter of one metal catalyst is at least 1.5 times the average particle diameter of the other metal catalyst. Prescribing the particle sizes of the metal catalysts in this manner is claimed to enable the CO poisoning resistance performance of the catalyst to be maintained over long periods.

Furthermore, JP 2003-109606 A discloses a polymer electrolyte fuel cell, wherein the size of the pores within the catalyst layer, formed using a pore-forming agent, varies across the thickness direction, from the side of the catalyst layer that contacts the polymer electrolyte membrane through to the side of the gas diffusion layer.

On the other hand, formation of the catalyst layer using a catalyst powder containing a catalyst-supporting particle such as a catalyst-supporting carbon having platinum (Pt) or the like supported thereon and a resin such as a solid polymer electrolyte is also known. For example, WO01/099216 discloses a catalyst layer that contains conductive particles for which the particle diameter of the primary particles does not exceed 150 nm, wherein these conductive particles support a catalyst and a hydrogen ion-conductive polymer electrolyte, and are formed as multinary particles of not less than 3 µm and not more than 15 µm. In WO01/099216, these multinary particles are prepared by a method in which a solution or dispersion of the hydrogen ion-conductive polymer electrolyte is sprayed into a dry atmosphere having the catalyst-supporting conductive microparticles flowing therethrough, or a mixed powder preparation method such as a method in which the catalyst-supporting conductive microparticles and the hydrogen ion-conductive polymer electrolyte are mixed together using a powder mixing system that utilizes a mechanochemical effect.

However, in the methods of JP 2005-243622 A, JP 2005-116416 A, JP 2003-303596 A, JP 08-162123 A, JP 02-18861 A and JP 3098219 B, although the particle diameter of the catalyst particles in the catalyst layer is mainly larger at the side of the diffusion layer and smaller at the side of the electrolyte, as a result, the pores formed within the catalyst layer tend to be small, with a size that is typically several tens of nm, whichmakes it impossible to achieve a satisfactorily smooth raw material supply and smooth discharge of generated water. For example, in the method of JP 08-162123 A, wherein a solution having the catalyst particles dispersed therein is allowed to settle naturally, thereby forming a gradient in terms of the degree of aggregation of the catalyst particles, or the method of JP 02-18861 A, wherein a centrifugal dewatering filtration device is charged with a polymer liquid containing the catalyst and PTFE in order to form the electrolyte catalyst layer, the pores formed within the catalyst layer are of a small size of several tens of nm, making it impossible to achieve a satisfactorily smooth raw material supply and smooth discharge of generated water. Furthermore, in the methods disclosed in JP 08-162123 A and JP 02-18861 A, the variation in particle size causes a deviation in the composition of the catalyst-supporting carbon and the solid polymer electrolyte.

Moreover, in the method of JP 2003-109606 A, the pore volume is controlled by using a pore-forming agent, but this use of a pore-forming agent increases the number of steps and the cost, and the pore-forming agent also causes a reduction in the size of the three-phase interface and a deterioration in the catalytic activity due to the washing and baking steps, resulting in a decrease in the power generation performance of the fuel cell.

Furthermore, the particle diameter is not uniform for the catalyst powder produced using the method disclosed in WO01/099216, making it impossible to achieve a satisfactorily smooth raw material supply and smooth discharge of generated water. Furthermore, the catalyst availability and robustness are also unsatisfactory, which limits the operating conditions and the composition of the catalyst layer, meaning the potential performance of the catalyst layer does not manifest satisfactorily. Moreover, in JP 08-162123 A, because only the particle diameter of the catalyst powder is prescribed, a satisfactory discharge performance is unobtainable.

In the manner described above, none of these methods is entirely satisfactory in controlling the deterioration in fuel cell performance caused by the dry-up phenomenon and flooding phenomenon.

### DISCLOSURE OF INVENTION

The present invention provides an assembly for a fuel cell, a fuel cell and a method for manufacturing the fuel cell that are able to suppress deterioration in the fuel cell performance caused by the dry-up phenomenon or flooding phenomenon.

The present invention provides an assembly for a fuel cell in which catalyst layers are formed so as to face one another across an electrolyte membrane that is sandwiched therebetween, wherein the catalyst layers comprise a first composite catalyst particle containing a catalyst-supporting particle and a solid polymer electrolyte, and a second composite catalyst particle, which contains a catalyst-supporting particle and a solid polymer electrolyte and has a larger volume average particle diameter than the first composite catalyst particle, and the arrangement of the first composite catalyst particle and the second composite catalyst particle is controlled in the thickness direction through the catalyst layer.

Furthermore, in the above assembly for a fuel cell, the layer containing the first composite catalyst particle is preferably disposed on top of the electrolyte membrane, and the layer containing the second composite catalyst particle is preferably disposed on top of the layer containing the first composite catalyst particle.

Furthermore, in the above assembly for a fuel cell, the volume average particle diameter of the first composite catalyst particle is preferably within a range from 0. 5 to 8 µm, and the volume average particle diameter of the second composite catalyst particle is preferably within a range from 5 to 20 µm.

Moreover, the present invention also provides a fuel cell, comprising an assembly for a fuel cell, in which catalyst layers are formed so as to face one another across an electrolyte membrane that is sandwiched therebetween, and diffusion layers that are formed on the catalyst layers, wherein the catalyst layers comprise a first composite catalyst particle containing a catalyst-supporting particle and a solid polymer electrolyte, and a second composite catalyst particle, which contains a catalyst-supporting particle and a solid polymer electrolyte and has a larger volume average particle diameter than the first composite catalyst particle, and the arrangement of the first composite catalyst particle and the second composite catalyst particle is controlled in the thickness direction through the catalyst layer.

Furthermore, in the above fuel cell, the layer containing the first composite catalyst particle is preferably disposed on the side of the electrolyte membrane, and the layer containing the second composite catalyst particle is preferably disposed on the side of the diffusion layer.

Furthermore, in the above fuel cell, the volume average particle diameter of the first composite catalyst particle is preferably within a range from 0.5 to 8 µm, and the volume average particle diameter of the second composite catalyst particle is preferably within a range from 5 to 20 µm.

Moreover, the present invention also provides a method for manufacturing a fuel cell comprising an assembly for a fuel cell, in which catalyst layers are formed so as to face one another across an electrolyte membrane that is sandwiched therebetween, and diffusion layers that are formed on the catalyst layers, wherein the catalyst layers comprise a first composite catalyst particle containing a catalyst-supporting particle and a solid polymer electrolyte, and a second composite catalyst particle, which contains a catalyst-supporting particle and a solid polymer electrolyte and has a larger volume average particle diameter than the first composite catalyst particle, and the arrangement of the first composite catalyst particle and the second composite catalyst particle is controlled in the thickness direction through the catalyst layer.

Furthermore, the above method for manufacturing a fuel cell may preferably comprise: forming a first catalyst layer comprising the first composite catalyst particle on at least one surface of the electrolyte membrane, and forming a second catalyst layer comprising the second composite catalyst particle on top of the first catalyst layer.

Furthermore, the above method for manufacturing a fuel cell may preferably comprise:forming a second catalyst layer comprising the second composite catalyst particle on one surface of the diffusion layer, and forming a first catalyst layer comprising the first composite catalyst particle on top of the second catalyst layer.

Furthermore, in the above method for manufacturing a fuel cell, the first composite catalyst particle and the second composite catalyst particle may be preferably obtained by a method comprising a slurry preparation step of preparing at least one slurry by mixing a catalyst-supporting particle, a solid polymer electrolyte and a solvent, a first spray drying step of forming the first composite catalyst particle comprising the catalyst-supporting particle and the solid polymer electrolyte by spray drying the slurry, and a second spray drying step of forming the second composite catalyst particle comprising the catalyst-supporting particle and the solid polymer electrolyte and having a larger volume average particle diameter than the first composite catalyst particle by spray drying the slurry.

Furthermore, in the above method for manufacturing a fuel cell, the first composite catalyst particle and the second composite catalyst particle may be preferably obtained by a method comprising a slurry preparation step of preparing a slurry by mixing a catalyst-supporting particle, a solid polymer electrolyte and a solvent, a spray drying step of forming, by spray drying the slurry, the first composite catalyst particle comprising the catalyst-supporting particle and the solid polymer electrolyte, and the second composite catalyst particle comprising the catalyst-supporting particle and the solid polymer electrolyte and having a larger volume average particle diameter than the first composite catalyst particle, and a classification step of classifying the first composite catalyst particle and the second composite catalyst particle.

In the present invention, in the assembly for a fuel cell or in the fuel cell, by including, in the catalyst layer, a first composite catalyst particle comprising a catalyst-supporting particle and a solid polymer electrolyte and a second composite catalyst particle having a larger volume average particle diameter than the first composite catalyst particle, and controlling the arrangement of the first composite catalyst particle and the second composite catalyst particle in the thickness direction through the catalyst layer, deterioration in the fuel cell performance caused by the dry-up phenomenon or flooding phenomenon can be suppressed, and a fuel cell of high efficiency can be obtained.

### BRIEF DESCRIPTION OF THE DRAWINGS

FIG. 1 is a schematic illustration showing one example of the structure of a fuel cell according to an embodiment of the present invention.
FIG. 2 is a schematic illustration showing one example of the structure of catalyst layers according to an embodiment of the present invention.
FIG. 3 is an illustration of a composite catalyst particle according to an embodiment of the present invention.
FIG. 4 is an illustrative cross-sectional view of a hollow composite catalyst particle according to an embodiment of the present invention.
FIG. 5 is a diagram showing one example of a method of preparing a composite catalyst particle according to an embodiment of the present invention.
FIG. 6 is a graph showing the particle size distributions of composite catalyst particles prepared in an example 1 and a comparative example 1 of the present invention.
FIG. 7 is a graph showing the porosity distribution within catalyst layers prepared in the example 1 and the comparative example 1 of the present invention.
FIG. 8 is a graph showing the relationship between the current density and the voltage value for fuel cells prepared in the example 1 and the comparative example 1 of the present invention.
FIG. 9 is a graph showing the particle size distributions of composite catalyst particles prepared in an example 2 of the present invention.
FIG. 10 is a graph showing the porosity distribution within catalyst layers prepared in the example 2 of the present invention.

### BEST MODE FOR CARRYING OUT THE INVENTION

Embodiments of the present invention are described below.

### <Assembly for Fuel Cell and Fuel Cell>

An assembly for a fuel cell and a fuel cell according to an embodiment of the present invention are described below. The assembly for a fuel cell according to this embodiment includes a fuel electrode (an anode catalyst layer), an electrolyte layer, and an air electrode (a cathode catalyst layer). Furthermore, the fuel cell according to the embodiment includes this assembly for a fuel cell, and diffusion layers.

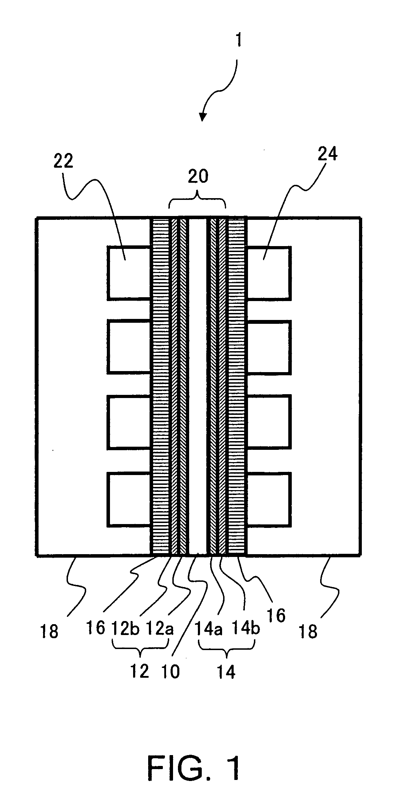

FIG. 1 shows a cross-sectional view of one example of the structure of the fuel cell according to the present embodiment. The fuel cell 1 comprises of an electrolyte membrane 10, a fuel electrode (anode catalyst layer) 12, an air electrode (cathode catalyst layer) 14, diffusion layers 16, and separators 18.

As shown in FIG. 1, the fuel cell 1 comprises a membrane electrode assembly (MEA) 20, which is an assembly for the fuel cell in which the fuel electrode 12 disposed on one surface of the electrolyte membrane 10 and the air electrode 14 disposed on the other surface face one another with the electrolyte membrane 10 sandwiched therebetween, diffusion layers 16 that are provided on both surfaces of the membrane electrode assembly 20, and comb-shaped separators 18 that are provided on the outside surfaces of both diffusion layers 16. The separators 18 are provided with raw material supply passages 22 and 24 for supplying the raw materials such as hydrogen gas and air to the fuel electrode 12 and the air electrode 14 respectively.

If the fuel cell 1 is operated using hydrogen gas as the raw material supplied to the fuel electrode 12 and air as the raw material supplied to the air electrode 14, then at the fuel electrode 12, hydrogen ions (H⁺) and electrons (e⁻) are generated from the hydrogen gas (H₂) via a chemical reaction (a hydrogen oxidation reaction) represented by the reaction equation shown below.

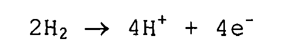

The electrons (e⁻) travel from the diffusion layer 16, through an external circuit, and then through the other diffusion layer 16 before reaching the air electrode 14. At the air electrode 14, the oxygen (O₂) within the supplied air, the hydrogen ions (H⁺) that have passed through the electrolyte membrane 10, and the electrons (e⁻) that have traveled through the external circuit to reach the air electrode 14 generate water via a chemical reaction represented by the reaction equation shown below.

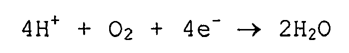

In this manner, chemical reactions occur at both the fuel electrode 12 and the air electrode 14, thereby generating an electrical charge and enabling the structure to function as an electric cell. Because the component discharged from this series of reactions is water, a clean electric cell is achieved.

In the present embodiment, the fuel electrode 12 and the air electrode 14 each comprises a first composite catalyst particle containing a catalyst-supporting particle and a solid polymer electrolyte, and a second composite catalyst particle, which contains a catalyst-supporting particle and a solid polymer electrolyte and has a larger volume average particle diameter than the first composite catalyst particle, and the arrangement of the first composite catalyst particle and the second composite catalyst particle is controlled in the thickness direction through the fuel electrode 12 and the air electrode 14. In this manner, by selectively arranging composite catalyst particles having different particle diameters across the thickness direction of the catalyst layers (the fuel electrode 12 and the air electrode 14), the pore distribution within the catalyst layers can be regulated, enabling the water drainage property, the gas diffusion property and the water balance within the catalyst layers to be controlled.

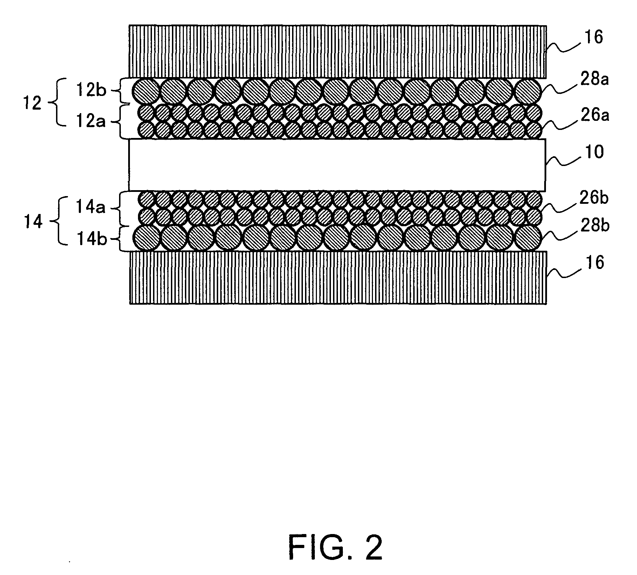

In the example shown in FIG. 1, the fuel electrode 12 includes a first catalyst layer 12a and a second catalyst layer 12b, and the air electrode 14 includes a first catalyst layer 14a and a second catalyst layer 14b. The first catalyst layer 12a is formed on one surface of the electrolyte membrane 10, with the second catalyst layer 12b formed on top of the first catalyst layer 12a, and the first catalyst layer 14a is formed on the other surface of the electrolyte membrane 10, with the second catalyst layer 14b formed on top of the first catalyst layer 14a. Further, as shown in the schematic illustration of FIG. 2, the first catalyst layer 12a comprises a first composite catalyst particle 26a containing a catalyst-supporting particle and a solid polymer electrolyte, whereas the second catalyst layer 12b comprises a second composite catalyst particle 28a containing a catalyst-supporting particle and a solid polymer electrolyte, wherein the second composite catalyst particle 28a has a larger volume average particle diameter than the first composite catalyst particle 2 6a. Furthermore, the first catalyst layer 14a comprises a first composite catalyst particle 26b containing a catalyst-supporting particle and a solid polymer electrolyte, whereas the second catalyst layer 14b comprises a second composite catalyst particle 28b containing a catalyst-supporting particle and a solid polymer electrolyte, wherein the second composite catalyst particle 28b has a larger volume average particle diameter than the first composite catalyst particle 26b.

By adopting this type of structure, in which the second composite catalyst particles 28a and 28b having the larger particle diameters are arranged on the side of the diffusion layers 16, and the first composite catalyst particles 26a and 26b having the smaller particle diameters are arranged on the side of the electrolyte membrane 10, the pore volume may be increased close to the diffusion layers 16, thereby improving the water drainage of the generated water produced by the electrode reaction and improving the diffusion property of the gases required for the electrode reactions, whereas the number of inter-particle contact points within the catalyst layer may increase close to the electrolyte membrane 10, thereby improving the electrical and proton conductivity, and improving the access of the reaction gases to the catalyst and electrolyte sites of the composite catalyst particles as a result of an increase in the composite catalyst particle surface area, and as a result, a superior discharge performance can be obtained. Moreover, because the water balance within the interior of the catalyst layers can be controlled, in other words, because the water drainage can be improved at the side of the diffusion layers 16 and the water retention can be improved at the side of the electrolyte membrane 10, accumulation of generated water, and therefore the flooding phenomenon and dry-up phenomenon, can be suppressed within the catalyst layers, thus improving the robustness.

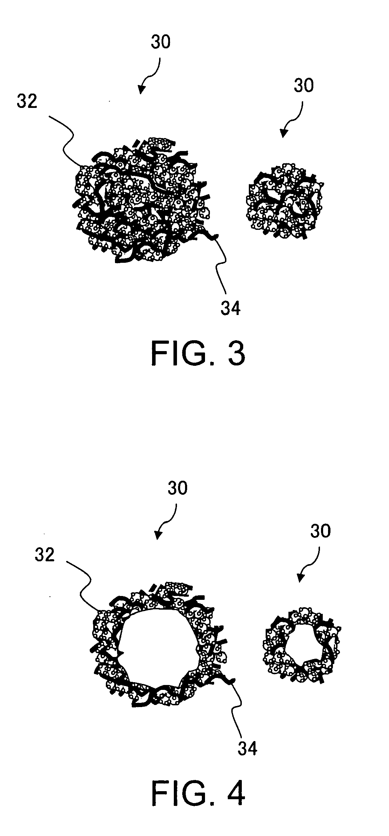

An illustration of a composite catalyst particle according to the present embodiment is shown in FIG. 3. The composite catalyst particle 30 comprises a catalyst-supporting particle 32 and a solid polymer electrolyte 34. The composite catalyst particle 30 may be either a "solid particle", or a "hollow particle" having a void formed within its interior, such as the particle shown in the cross-sectional view of FIG. 4. Furthermore, the composite catalyst particles may include both "solid particles" and "hollow particles". In this description, the term "hollow particle" refers to a spherical shell-type particle having a void within the interior, but this void need not necessarily be a closed space, and for example, a portion of the outer shell of the spherical shell-type particle may be absent, generating an open space that is linked with the outside. Moreover, although the shape of the composite catalyst particle 30 is preferably spherical, a substantially spherical shape that includes partial indentations may be also suitable.

Examples of materials that may be used as the catalyst-supporting particle 32 include carbon with platinum (Pt) or the like supported thereon, carbon having platinum (Pt) or the like and another metal such as ruthenium (Ru) supported thereon, and PtFe· PtCO and the like. The volume average particle diameter of the catalyst-supporting particle 32 is typically within a range from 2 to 20 µm.

There are no particular restrictions on the solid polymer electrolyte 34, provided it is formed from a material that exhibits high ion conductivity for ions such as protons (H⁺), and example materials include solid polymer electrolytes such as perfluorosulfonic acid-based electrolytes. Specific examples of the materials that can be used include perfluorosulfonic acid-based solid polymer electrolytes such as Goreselect (a registered trademark) manufactured by Japan Goretex Inc., Nafion (a registered trademark) manufactured by DuPont Corporation, Aciplex (a registered trademark) manufactured by Asahi Kasei Corporation, and Flemion (a registered trademark) manufactured by Asahi Glass Co., Ltd.

The catalyst-supporting particles 32 and the solid polymer electrolyte 34 incorporated within the first catalyst layer 12a and the second catalyst layer 12b of the fuel electrode 12, and the first catalyst layer 14a and the second catalyst layer 14b of the air electrode 14 may be either the same or different.

In the present embodiment, as shown in FIG. 2, the second composite catalyst particles 28a and 28b incorporated within the second catalyst layers 12b and 14b formed on the side of the diffusion layers 16 have a larger volume average particle diameter than the first composite catalyst particles 26a and 26b incorporated within the first catalyst layers 12a and 14a formed on the side of the electrolyte membrane 10. The volume average particle diameter of the first composite catalyst particles 26a and 26b is preferably within a range from 0.5 to 8 µm, and is more preferably within a range from 0.5 to 5 µm. Furthermore, the volume average particle 5 diameter of the second composite catalyst particles 28a and 28b is preferably within a range from 5 to 20 µm, and is more preferably within a range from 5 to 12 µm. If the volume average particle diameter of the first composite catalyst particles 26a and 26b is less than 0.5 µm, then a deterioration in cell performance may occur as a result of increased contact resistance that accompanies the increase in the number of contact points between the composite catalyst particles, whereas if the volume average particle diameter exceeds 8 µm, then the cell durability may deteriorate as a result of damage or the like to the electrolyte membrane caused by the composite catalyst particles biting into the electrolyte membrane. Furthermore, if the volume average particle diameter of the second composite catalyst particles 28a and 28b is less than 5 µm, then the size of the inter-particle spaces may be insufficient in terms of achieving favorable drainage of the generated water, whereas if the volume average particle diameter exceeds 20 µm, then the thickness of the catalyst layer may cause a deterioration in the cell performance due to a lengthening of the mass transfer distance.

In conventional methods where the particle diameter of the catalyst-supporting particles within the catalyst layer is larger at the side of the diffusion layers and smaller at the side of the electrolyte membrane, the pores (voids) formed within the catalyst layers are of a small size of several tens of nm, making it impossible to achieve a satisfactorily smooth raw material supply and smooth drainage of generated water. In contrast, in the method according to the present embodiment, the pores (voids) formed within the catalyst layers include not only the conventional pores of several tens of nm derived from the supporting carbon, but also pores having a size of 0.1 to 5 µm derived from the inter-particle spaces, and as a result, smooth raw material supply and smooth drainage of the generated water can be achieved.

Furthermore, the particle size distributions for the first composite catalyst particles 26a and 26b and the second composite catalyst particles 28a and 28b are preferably within a range from 0.5 to 5 µm, and are more preferably within a range from 0.1 to 1.0 µm. For the same reasons as those described above for the volume average particle diameter, such particle size distributions enable even larger effects to be obtained.

The particle size distribution for a composite catalyst particle can be measured using a laser diffraction particle size distribution analyzer (manufactured by Sysmex Corporation) or a Microtrac particle size distribution analyzer (manufactured by Nikkiso Co., Ltd.). A method for manufacturing the composite catalyst particle is described below.

Moreover, in order to improve the water drainage at the side of the diffusion layers 16, the pore diameter within the second catalyst layers 12b and 14b is preferably larger than the pore diameter within the first catalyst layers 12a and 14a. The pore diameter within the second catalyst layers 12b and 14b is preferably within a range from 1. 0 to 5.0 µm, whereas the pore diameter within the first catalyst layers 12a and 14a is preferably within a range from 0.1 to 1.0 µm.

Furthermore, the pore size distribution within the first catalyst layers 12a and 14a is preferably within a range from 0.1 to 1.0 µm, and is more preferably within a range from 0.1 to 0.6 µm. If the pore size distribution within the first catalyst layers 12a and 14a is less than 0.1 µm, then a deterioration in cell performance may occur as a result of increased contact resistance that accompanies the increase in the number of contact points between the composite catalyst particles, whereas if the pore size distribution exceeds 1.0 µm, then the cell durability may deteriorate as a result of damage or the like to the electrolyte membrane caused by the composite catalyst particles biting into the electrolyte membrane. The pore size distribution within the second catalyst layers 12b and 14b is preferably within a range from 0.1 to 1.0 µm, and is more preferably within a range from 0.1 to 0.6 µm. If the pore size distribution within the second catalyst layers 12b and 14b is less than 0.1 µm, then the size of the inter-particle spaces may be insufficient in terms of achieving favorable drainage of the generated water, whereas if the pore size distribution exceeds 1.0 µm, then the thickness of the catalyst layer may cause a deterioration in the cell performance due to a lengthening of the mass transfer distance.

The pore diameter may be determined as the peak pore diameter within a pore size distribution measured using a typical mercury porosimeter (for example, a Pore Master manufactured by Yuasa Ionics Co., Ltd.).

The fuel electrode 12 may be composed of at least two layers, namely the first catalyst layer 12a that is formed using the first composite catalyst particle 26a containing a catalyst-supporting particle composed of carbon or the like having either.platinum (Pt) or a combination of platinum (Pt) or the like and another metal such as ruthenium (Ru) supported thereon, and a solid polymer electrolyte such as Nafion (a registered trademark), and the second catalyst layer 12b that is formed using the second composite catalyst particle 28a having a larger volume average particle diameter than the first composite catalyst particle 26a. The film thickness of the first catalyst layer 12a is typically within a range from 0.5 to 5 µm. Furthermore, the film thickness of the second catalyst layer 12b is typically within a range from 5 to 20 µm, and is preferably from 5 to 12 µm. The fuel electrode 12 may also be composed of three or more layers, wherein the volume average particle diameter of the composite catalyst particle within each layer increases gradually from the side of the electrolyte membrane 10 to the side of the diffusion layer 16.

The air electrode 14 may be composed of at least two layers, namely the first catalyst layer 14a that is formed using the first composite catalyst particle 26b containing a catalyst-supporting particle composed of carbon or the like having platinum (Pt) or the like supported thereon, and a solid polymer electrolyte such as Nafion (a registered trademark), and the second catalyst layer 14b that is formed using the second composite catalyst particle 28b having a larger volume average particle diameter than the first composite catalyst particle 26b. The film thickness of the first catalyst layer 14a is typically within a range from 0.5 to 5 µm. Furthermore, the film thickness of the second catalyst layer 14b is typically within a range from 5 to 20 µm, and is preferably from 5 to 12 µm. The air electrode 14 may also be composed of three or more layers, wherein the volume average particle diameter of the composite catalyst particle within each layer increases gradually from the side of the electrolyte membrane 10 to the side of the diffusion layer 16.

There are no particular restrictions on the electrolyte membrane 10, provided it is formed from a material that exhibits high ion conductivity for ions such as protons (H⁺), and example materials include solid polymer electrolyte membranes such as perfluorosulfonic acid-based membranes and hydrocarbon-based membranes. Specific examples of the materials that can be used include perfluorosulfonic acid-based solid polymer electrolyte membranes such as Goreselect(a registered trademark) manufactured byJapanGoretexInc., Nafion (a registeredtrademark) manufactured by DuPont Corporation, Aciplex (a registered trademark) manufactured by Asahi Kasei Corporation, and Flemion (a registered trademark) manufactured by Asahi Glass Co., Ltd. The film thickness of the electrolyte membrane 10 is typically within a range from 10 to 200 µm, and is preferably from 20 to 50 µm.

If required, a stretched porous film may be provided as a reinforcing film on the electrolyte membrane 10, wherein examples of this stretched porous film include films of polytetrafluoroethylene (PTFE), ultra high molecular weight polyethylene or polyimide, and polytetrafluoroethylene (PTFE) is preferred. In this case, the electrolyte membrane 10 is formed on the both surfaces of the reinforcing film using a method such as solution casting. The resulting structure may be either a three-layer structure in which the electrolyte membrane 10 is formed on the upper and lower surfaces of the reinforcing film, or may be a five-layer structure or a multilayer structure having even more layers. The film thickness of the reinforcing film is typically within a range from 5 to 100 µm.

There are no particular restrictions on the material for the diffusion layers 16, provided the material exhibits a high level of conductivity and allows favorable diffusion of the raw materials such as the fuel and air, although a porous conducting material is preferred. Examples of highly conductive materials include metal plates, metal films, conductive polymers and carbon materials, and of these, carbon materials such as carbon cloth, carbon paper and glass-like carbon are preferred, and porous carbon materials such as carbon cloth and carbon paper are particularly desirable. The film thickness of the diffusion layer 16 is typically within a range from 50 to 1,000 µm, and is preferably within a range from 100 to 600 µm.

Furthermore, in order to improve the water repellency of the diffusion layers 16, the diffusion layer 16 may be subjected to a water repellency treatment using a water repellent paste formed from a mixed solution containing a water repellent resin such as polytetrafluoroethylene (PTFE) and a material having electron conductivity such as a carbon black.

The separators 18 are each composed of a metal plate that has undergone a corrosion resistance treatment, a carbon-based material such as calcined carbon, or the like. The separators 18 are provided with raw material supply passages 22 and 24 for supplying the raw materials such as hydrogen gas and air to the fuel electrode 12 and the air electrode 14 respectively.

In the fuel cell 1 manufactured in this manner, if the diffusion layer 16 on the side of the fuel electrode 12 , the diffusion layer 16 on the side of the air electrode 14, and an external circuit are connected electrically, and operation is then commenced by supplying raw materials to the fuel electrode 12 and the air electrode 14, this structure can be operated as a fuel cell.

Examples of the raw material supplied to the fuel electrode 12 include reducing gases (fuel gases) such as hydrogen or methane, or liquid fuels such as methanol. Examples of the raw material supplied to the air electrode 14 include oxidizing gases or the like such as oxygen or air.

### <Method for Manufacturing Fuel Cell>

### (Composite Catalyst Particle)

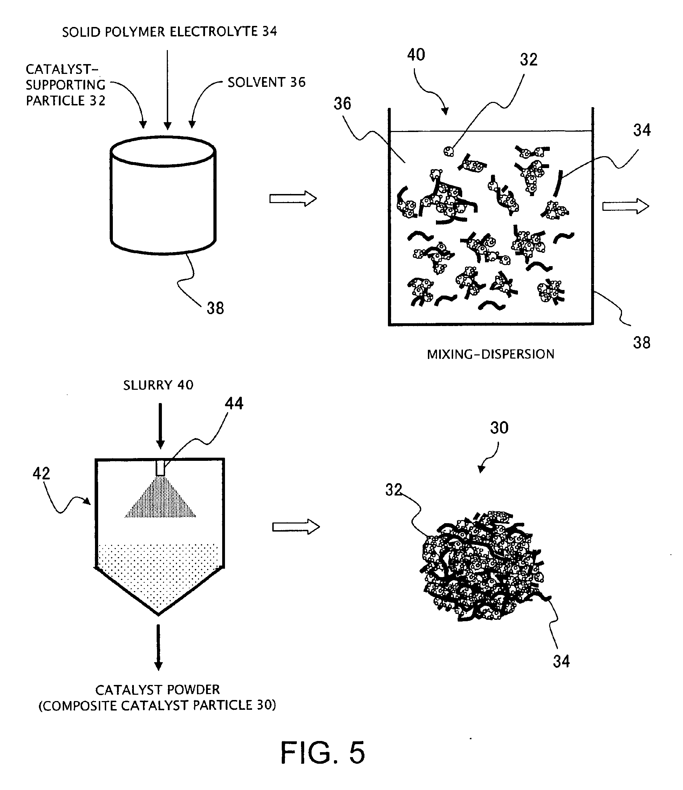

Furthermore, the composite catalyst particle according to an embodiment of the present invention may be produced, for example, in the manner shown in FIG. 5, by using a method comprising: a slurry preparation step of preparing at least one slurry (ink) 40 by mixing and dispersing the catalyst-supporting particle 32, the solid polymer electrolyte 34 and a solvent 36 in a container 38, and a spray drying step of forming and granulating the composite catalyst particle 30 comprising the catalyst-supporting particle 32 and the solid polymer electrolyte 34 by spray drying the slurry 40 using a spray drying unit 42.

The mixing and dispersing of the catalyst-supporting particle 32, the solid polymer electrolyte 34 and the solvent 36 may be conducted using a dispersion method that uses any of the various mills such as ball mills, jet mills and roll mills, or using a ultrasonic dispersion method.

Examples of methods of spray drying the slurry include a spray drying method in which a spray dryer as a spray drying unit 42 is used, and the slurry 40 is sprayed from an atomizer 44 or the like in the form of a stream of microparticle droplets and then brought into contact with a high-temperature gas stream, thereby instantaneously drying the mist and generating the composite catalyst particles, and a method that uses an ultrasonic atomizing unit. In the spray drying method, by controlling the solid fraction concentration of the slurry 40, or other factors such as the viscosity or surface tension of the slurry 40, the temperature during spray drying, the liquid spray volume, the spray pressure or the spray nozzle diameter, aggregates of the catalyst-supporting particle 32 and the solid polymer electrolyte 34 can be formed, enabling the production of a solid or hollow composite catalyst particle 30 having the desired uniform particle diameter. For example, if the solid fraction concentration of the slurry 40 is increased or the spray pressure is reduced, then a composite catalyst particle 30 of relatively larger particle diameter can be obtained, whereas if the solid fraction concentration is lowered or the spray pressure is increased, then a composite catalyst particle 30 of relatively smaller particle diameter can be obtained. In this manner, the particle diameter of the composite catalyst particle can be freely controlled by using a method that includes spray drying of the slurry. Furthermore, by raising the temperature, reducing the liquid spray volume, reducing the spray pressure or the like during spray drying, rapid drying of the mist may be promoted, enabling the production of a hollow composite catalyst particle 30.

An example of a method of preparing composite catalyst particles having different volume average particle diameters comprises: preparing at least one slurry 40 by mixing the catalyst-supporting particle 32, the solid polymer electrolyte 34 and the solvent 36 (a slurry preparation step), forming a first composite catalyst particle comprising the catalyst-supporting particle 32 and the solid polymer electrolyte 34 by spray drying the slurry 40 (a first spray drying step), and forming a second composite catalyst particle comprising the catalyst-supporting particle 32 and the solid polymer electrolyte 34 and having a larger volume average particle diameter than the first composite catalyst particle by spray drying a slurry 40 that may be either the same as, or different from, the slurry used in the first spray drying step, under conditions that may be either the same as, or different from, the conditions used in the first spray drying step (a second spray drying step). In this method, at least two spray drying steps are necessary, but a classification step is not particularly necessary.

Furthermore, another method comprises: preparing a slurry 40 by mixing the catalyst-supporting particle 32, the solid polymer electrolyte 34 and the solvent 36 (a slurry preparation step), forming, by spray drying the slurry, a first composite catalyst particle comprising the catalyst-supporting particle 32 and the solid polymer electrolyte 34, and a second composite catalyst particle comprising the catalyst-supporting particle 32 and the solid polymer electrolyte 34 and having a larger volume average particle diameter than the first composite catalyst particle (a spray drying step), and classifying the first composite catalyst particle and the second composite catalyst particle (a classification step). In this method, although a classification step is required, only a single spray drying step need be conducted. Furthermore, because a classification is performed, composite catalyst particles can be obtained that have a sharper particle size distribution, namely composite catalyst particles that have a particle size distribution within the preferred range described above, and using these composite catalyst particles facilitates finer control of the catalyst layer structure and makes multilayering possible, meaning the performance of the fuel cell can be further improved.

Examples of the classification method include methods that employ any of a variety of vibrating screen systems or air flow systems, although in terms of classifying very fine powders at the µm level or below, classification methods that use an air flow system are preferred.

There are no particular restrictions on the solvent 36, provided it is capable of dissolving the solid polymer electrolyte 34 and favorably dispersing the catalyst-supporting particle 32, and the use of either a good solvent for the solid polymer electrolyte 34, or a mixture of a good solvent for the solid polymer electrolyte 34 and water, is preferred. Examples of good solvents for the solid polymer electrolyte 34 include organic solvents including alcohol-based solvents such as methanol and ethanol, and ketone-based solvents such as acetone, although in terms of handling and the dispersibility of the catalyst-supporting particle 32 , an alcohol-based solvent such as methanol or ethanol is preferred.

For example, when a mixed solvent of water with either methanol or ethanol is used, the mixing ratio between the water and the methanol or ethanol, reported as a weight ratio, is preferably from 30:70 to 80:20. If the quantity of water exceeds 80:20, then the dispersion capability of the mixed solvent may deteriorate, and formation of the composite catalyst particle 30 may become difficult. In contrast, if the quantity of water is less than 30:70, then factors such as the flammability of the alcohol-based solvent may make handling more difficult. For these reasons, it is preferable to use a mixture of a good solvent for the solid polymer electrolyte 34 and water rather than solely a good solvent for the solid polymer electrolyte 34.

The temperature during spray drying may be set in accordance with factors such as the boiling point of the solvent being used, or the glass transition temperature (Tg) of the solid polymer electrolyte 34 being used. In order to obtain a hollow composite catalyst particle 30, the spray drying temperature is preferably not less than the boiling point of the solvent being used. The temperature during spray drying is typically within a range from ) 30 to 150°C, and is preferably within a range from 40 to 120°C. A temperature during spray drying that is higher than the glass transition temperature (Tg) of the solid polymer electrolyte 34 being used may have an adverse effect on the proton conductivity or the like of the electrolyte, which may lead to a deterioration in the fuel cell performance.

### (Fuel Cell)

The first catalyst layer 12a and the second catalyst layer 12b, and the first catalyst layer 14a and the second catalyst layer 14b may be formed sequentially on top of either the electrolyte membrane 10 or the diffusion layer 16 by direct dry application of the above composite catalyst particles. Alternatively, the layers may also be formed sequentially on the electrolyte membrane 10 or the diffusion layer 16 by wet application using an ink containing the composite catalyst particles dispersed within a solvent. Following application and film formation, heating and compression may be used to strengthen the bonding interface between the fuel electrode 12 and the air electrode 14, and the electrolyte membrane 10 or the diffusion layer 16, thereby fixing the layers together and completing production of the electrodes.

Examples of dry application methods include electrostatic screen methods in which the catalyst powder is subjected to dry application by dropping through a screen having a predetermined pattern generated using an electrostatic voltage, electrophotographic methods in which a charged catalyst powder is adhered electrostatically to a photosensitive drum that has been charged with a predetermined pattern and the electrostatically adhered catalyst powder on the photosensitive drum is then transferred, and spray methods in which the catalyst powder is subjected to dry application by spraying through a mask having a predetermined pattern, but of these, in terms of being able to conduct application in a predetermined pattern without requiring masking, an electrostatic screen method or an electrophotographic method is preferred.

By using a dry application method for the powder, the two steps typically required in a conventional transfer method need not be conducted, and therefore both the number of process steps and the costs can be reduced. Furthermore, because the powder is applied directly, the type of solvent used in a conventional mixed slurry application is not required, meaning chemical damage to the electrolyte membrane 10 or the diffusion layer 16 during the application process can be reduced. Moreover, because the powder is produced as spherical particles, physical damage to the electrolyte membrane 10 or the diffusion layer 16 during the heating and compression that is used for fixing the layers and completing production of the electrodes can be reduced due to the cushioning properties of the particles.

A specific example of a method for manufacturing a fuel cell according to the present embodiment is described below. As shown in FIG. 5, a platinum-supporting carbon (the catalyst-supporting particle 32) and a perfluorosulfonic acid-based solid polymer electrolyte 34 in a weight ratio of 2:1 are added to and mixed with a mixed solvent (the solvent 36) of water/ethanol (weight ratio: 30:70 to 80:20), and the mixture is then dispersed under ultrasonic irradiation, there by preparing at least one slurry(ink) 40. The solid fraction concentration of the slurry, for example, in those cases where the desired volume average particle diameter is within a range from 0.5 to 8 µm, is typically set within a range from 1 to 8% by weight, or in those cases where the desired volume average particle diameter is within a range from 5 to 20 µm, is typically set within a range from 5 to 20% by weight. Composite catalyst particles having different volume average particle diameters may also be formed using a slurry of the same solid fraction concentration by varying the spray drying conditions.

Subsequently, using a spray dryer, the slurry 40 can be sprayed from an atomizer 44 in the form of microparticle droplets and then brought into contact with a high-temperature gas stream, thereby drying the mist instantaneously and forming composite catalyst particles. The conditions during this spray drying method may include, for example, a temperature during spray drying of 30 to 150°C, a liquid spray volume of 0.1 to 50 ml/min., and a drying airflow rate of 0.1 to 3.0 m³/min. The spray pressure may be set, for example, to a value of 0.05 to 1.0 MPa in the case where the desired volume average particle diameter is within a range from 0.5 to 8 µm, or to a value of 0.01 to 0.1 MPa in the case where the desired volume average particle diameter is within a range from 5 to 20 µm. Composite catalyst particles having different volume average particle diameters may also be formed under identical spray drying conditions by using slurries having different solid fraction concentrations.

In such cases, if the forming of the first composite catalyst particle having a volume average particle diameter within a range from 0.5 to 8 µm and the forming of the second composite catalyst particle having a volume average particle diameter within a range from 5 to 20 µmare conducted separately, then the composite catalyst particles obtained in these two steps may be transferred and used in the subsequent catalyst layer application step. Furthermore, if spray drying is conducted in a single step by sequentially using conditions for forming the first composite catalyst particle having a volume average particle diameter within a range from 0.5 to 8 µm, and then using conditions for forming the second composite catalyst particle having a volume average particle diameter within a range from 5 to 20 µm, then an air flow classification device may be used to classify the particles, and the classified composite catalyst particles then transferred and used in the subsequent catalyst layer application step.

Subsequently, using an electrostatic screen method, the first catalyst layer 12a that uses the first composite catalyst particle and the second catalyst layer 12b that uses the second composite catalyst particle may be formed sequentially on one surface of the electrolyte membrane 10 so that the platinum content within each layer is within a range from 0.1 to 0.4 mg/cm² and the total platinum content is 0.5 mg/cm², and a roll press device may then be used to fix the layers under conditions including a temperature of 120 to 160°C, a press pressure of 10 to 50 kgf/cm, and a speed of 0.6 to 15 m/min. In a similar manner, the first catalyst layer 14a and the second catalyst layer 14b may be formed sequentially on the other surface of the electrolyte membrane 10, and then fixed using the roll press device. Subsequently, conventional methods may be used to form the diffusion layers 16 and the separators 18, and then connect the two diffusion layers 16 electrically to an external circuit, thus forming a cell.

The fuel cell according to the present embodiment is not limited to the flat type of structure shown in FIG. 1, and may also adopt a tube-like structure. Furthermore, with the fuel cell according to the present embodiment, by combining a plurality of single fuel cells (unit cells) and connecting the cells in series, the required electrical current and voltage can be obtained. Furthermore, a plurality of single fuel cells (unit cells) may also be combined and connected in parallel.

The fuel cell according to the present embodiment can be used, for example, as a small power source for portable equipment such as mobile phones and portable computers, or as a power source for automobiles, households or the like.

### EXAMPLES

A more detailed description of specifics of the present invention is provided below based on examples and a comparative example, although the present invention is in no way limited by the examples presented below.

### (Example 1)

### <Preparation of Ink A>

1 part by weight of a 50% by weight platinum-supporting carbon as a catalyst-supporting particle, 0.5 parts by weight of Nafion (a registered trademark, manufactured by DuPont Corporation) as a solid polymer electrolyte, and 10 parts by weight of water and 10 parts by weight of ethanol as solvents were mixed together and then dispersed using an ultrasonic dispersion method, thus completing preparation of an ink A.

### <Preparation of Ink B>

1 part by weight of a 50% by weight platinum-supporting carbon as a catalyst-supporting particle, 0.5 parts by weight of Nafion (a registered trademark, manufactured by DuPont Corporation) as a solid polymer electrolyte, and 50 parts by weight of water and 50 parts by weight of ethanol as solvents were mixed together and then dispersed using an ultrasonic dispersion method, thus completing preparation of an ink B.

### <Preparation of Composite Catalyst Particles A and B>

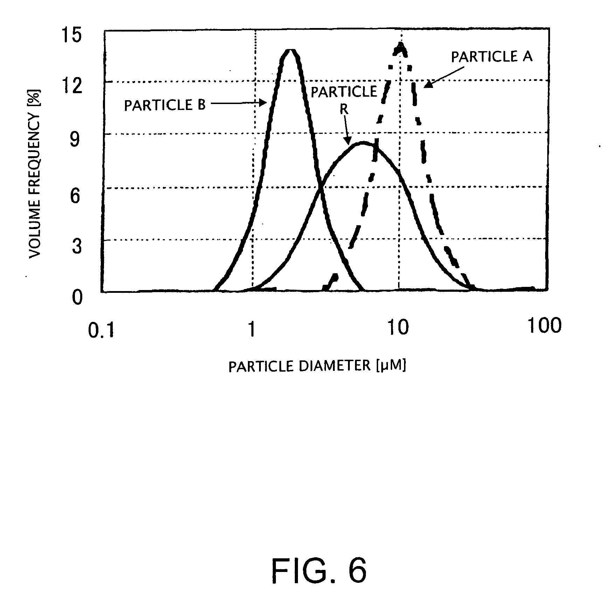

Using the inks A and B, a spray dryer was used to prepare composite catalyst particles A and B respectively. The spray drying conditions (spray nozzle diameter, spray pressure, spray temperature, ink feed rate (liquid spray volume), and drying airflow rate) used for the spray dryer were as shown in Table 1. The spray temperature refers to the temperature at the ink inlet of the spray dryer. The volume average particle diameter of the prepared composite catalyst particle A was 10 µm, whereas the volume average particle diameter of the composite catalyst particle B was 1. 8 µm. The particle size distribution and the volume average particle diameter for each composite catalyst particle were measured using a particle size distribution analyzer (Aerotrac SPR, manufactured by Nikkiso Co., Ltd.). The results are shown in FIG. 6. Furthermore, inspection of cross-sections of the prepared composite catalyst particles A and B using a scanning electron microscope (SEM) confirmed that solid spherical particles had been formed in both cases.

### <Application and Fixing of Composite Catalyst Particles>

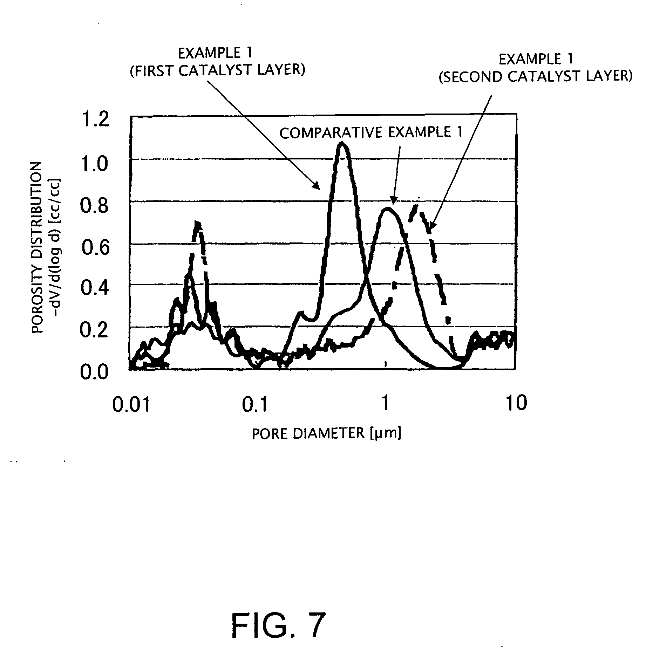

Using Nafion (a registered trademark, manufactured by DuPont Corporation) as an electrolyte membrane, the above composite catalyst particle B (volume average particle diameter: 1.8 µm) was dry coated onto the electrolyte membrane using an electrostatic screen method so as to generate a quantity of the catalyst powder equivalent to a platinum quantity of 0.25 mg/cm², and a roll press device was then used to fix the catalyst powder under conditions including a temperature of 130°C, a press pressure of 30 kgf/cm and a speed of 10 m/min., thereby forming a first catalyst layer. Subsequently, a second catalyst layer was dry coated onto the first catalyst layer by applying the above composite catalyst particle A (volume average particle diameter: 10 µm) so as to generate a quantity of the catalyst powder equivalent to a platinum quantity of 0.25 mg/cm². A roll press device was then used to fix the catalyst powder under conditions of 130°C, 30 kgf/cm and 10 m/min., thereby forming a second catalyst layer and completing preparation of a fuel cell. The results of measuring the porosity distribution and the peak pore diameter using a mercury porosimeter are shown in FIG. 7. The peak pore diameter for the first catalyst layer was 0.4 µm, and the peak pore diameter for the second catalyst layer was 1.9 µm.

### <Evaluation of Cell Performance>

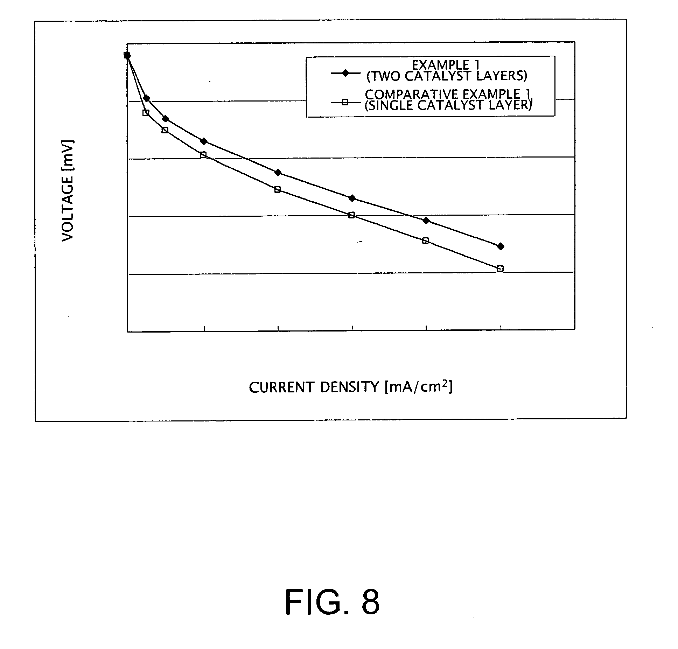

The cell performance of the sample prepared in the above manner was evaluated. The results of evaluating the relationship between the current density and the voltage are shown in FIG. 8.

### (Comparative Example 1)

### <Preparation of Ink R>

1 part by weight of a 50% by weight platinum-supporting carbon as a catalyst-supporting particle, 0.5 parts by weight of Nafion (a registered trademark, manufactured by DuPont Corporation) as a solid polymer electrolyte, and 10 parts by weight of water and 10 parts by weight of ethanol as solvents were mixed together and then dispersed using an ultrasonic dispersion method, thus completing preparation of an ink R.

### <Preparation of Composite Catalyst Particle R>

Using the ink R, a spray dryer was used to prepare a composite catalyst particle R. The spray drying conditions (spray nozzle diameter, spray pressure, spray temperature, ink feed rate (liquid spray volume), and drying airflow rate) used for the spray dryer were as shown in Table 1. The volume average particle diameter of the prepared composite catalyst particle R was 5.5 µm. The results are shown in FIG. 6. Furthermore, inspection of a cross-section of the prepared composite catalyst particle R using a scanning electron microscope (SEM) confirmed that a solid spherical particle had been formed.

### <Application and Fixing of Composite Catalyst Particle>

Using Nafion (a registered trademark, manufactured by DuPont Corporation) as an electrolyte membrane, the above composite catalyst particle R (volume average particle diameter: 5.5 µm) was dry coated onto the electrolyte membrane using an electrostatic screen method so as to generate a quantity of the catalyst powder equivalent to a platinum quantity of 0.5 mg/cm², and a roll press device was then used to fix the catalyst powder under conditions including a temperature of 130°C, a press pressure of 30 kgf/cm and a speed of 10 m/min., thereby forming a catalyst layer and completing preparation of a fuel cell. The results of measuring the porosity distribution and the peak pore diameter using a mercury porosimeter are shown in FIG. 7. The peak pore diameter for the catalyst layer was 1.1 µm.

### <Evaluation of Cell Performance>

The cell performance of the sample prepared in the above manner was evaluated in the same manner as the example 1. The results of evaluating the relationship between the current density and the voltage are shown in FIG. 8.

As is evident from FIG. 8, by adopting a structure in which the composite catalyst particle B having the larger particle diameter is arranged on the diffusion layer side of the catalyst layer, and the composite catalyst particle A having the smaller particle diameter is arranged on the electrolyte membrane side, the stability of the voltage can be improved within the low current region where the dry-up phenomenon is more prevalent and the high current region where the flooding phenomenon is more prevalent, meaning the robustness of the fuel cell can be improved.

### (Example 2)

### <Preparation of Composite Catalyst Particles C and D>

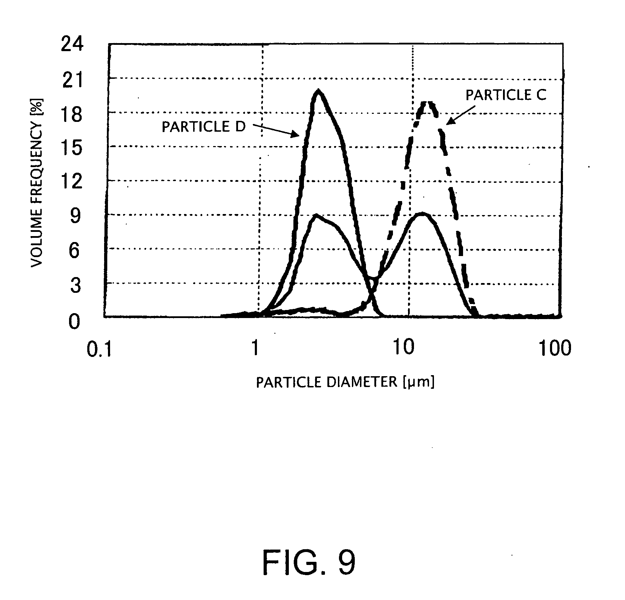

Using the ink A prepared in the example 1 and using a spray dryer, composite catalyst particles having different particle diameters were prepared by altering the spray pressure during spray drying. The spray drying conditions (spray nozzle diameter, spray pressure, spray temperature, ink feed rate (liquid spray volume), and drying airflow rate) were as shown in Table 1. Subsequently, an air flow classification was conducted using a cyclone system, thereby classifying the particles into a composite catalyst particle C and a composite catalyst particle D. The volume average particle diameter of the prepared composite catalyst particle C was 11.2 µm, whereas the volume average particle diameter of the composite catalyst particle D was 2.5 µm. The results are shown in FIG. 9.

### <Application and Fixing of Composite Catalyst Particles>

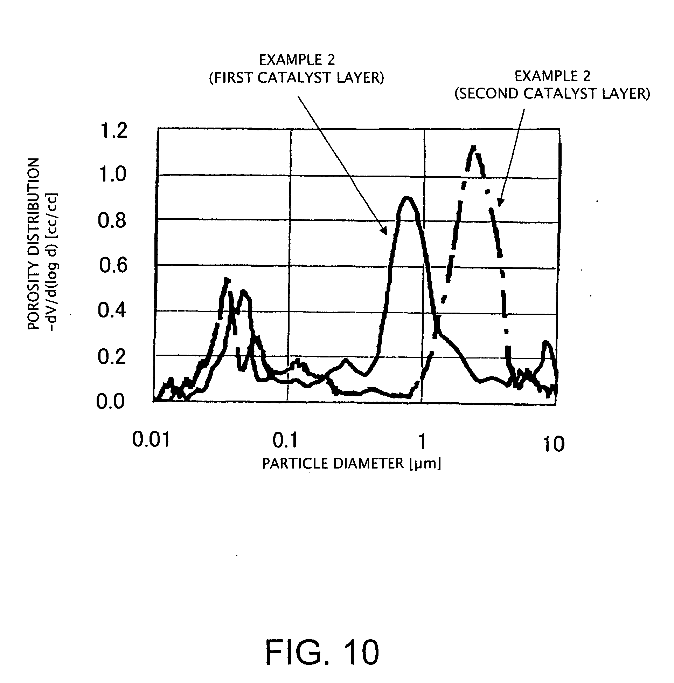

With the exceptions of using the composite catalyst particle D instead of the composite catalyst particle B, and using the composite catalyst particle C instead of the composite catalyst particle A, a first catalyst layer and a second catalyst layer were formed in the same manner as the example 1, thereby completing preparation of a fuel cell. The results of measuring the porosity distribution and the peak pore diameter using a mercury porosimeter are shown in FIG. 10. The peak pore diameter for the first catalyst layer was 0.6 µm, and the peak pore diameter for the second catalyst layer was 2.2 µm.

### <Evaluation of Cell Performance>

The cell performance of the sample prepared in the above manner was evaluated in the same manner as the example 1. The results of evaluating the relationship between the current density and the voltage clearly revealed a similar effect to that obtained in the example 1.

**[Table 1]**

| | | Example 1 | | Example 2 | | Comparative example 1 |
|---|---|---|---|---|---|---|
| | | Particle A | Particle B | Particle C | Particle D | Particle R |
| Ink composition | 50 wt% Pt/C [parts by weight) | 1 | 1 | 1 | 1 | 1 |
| | Electrolyte [parts by weight] | 0.5 | 0.5 | 0.5 | 0.5 | 0.5 |
| | Water [parts by weight] | 10 | 50 | 10 | 10 | 10 |
| | Ethanol [parts by weight] | 10 | 50 | 10 | 10 | 10 |
| Spray drying conditions | Spray pressure [MPa] | 0.05 | 0.1 | 0.05 → 1.0 | | 0.1 |
| | Spray temperature [°C] | 80 | 80 | 80 | | 80 |
| | Ink feed rate [ml/min.] | 10 | 10 | 10 | | 10 |
| | Circulating gas volume [m³/min.] | 0.5 | 0.5 | 0.5 | | 0.5 |
| Powder properties | Volume average particle diameter [µm] | 10 | 1.8 | 11.2 | 2.5 | 5.5 |
| | Peak pore diameter [µm] | 1.9 | 0.4 | 2.2 | 0.6 | 1.1 |

## Claims

1. An assembly for a fuel cell, in which catalyst layers are formed so as to face one another across an electrolyte membrane sandwiched therebetween, wherein
the catalyst layers comprise a first composite catalyst particle containing a catalyst-supporting particle and a solid polymer electrolyte, and a second composite catalyst particle, which contains a catalyst-supporting particle and a solid polymer electrolyte and has a larger volume average particle diameter than the first composite catalyst particle, and
an arrangement of the first composite catalyst particle and the second composite catalyst particle is controlled in a thickness direction through the catalyst layer.

2. The assembly for a fuel cell according to claim 1, wherein
a layer containing the first composite catalyst particle is disposed on top of the electrolyte membrane, and a layer containing the second composite catalyst particle is disposed on top of the layer containing the first composite catalyst particle.

3. The assembly for a fuel cell according to claim 1, wherein
a volume average particle diameter of the first composite catalyst particle is within a range from 0.5 to 8 µm, and a volume average particle diameter of the second composite catalyst particle is within a range from 5 to 20 µm.

4. A fuel cell, comprising an assembly for a fuel cell in which catalyst layers are formed so as to face one another across an electrolyte membrane sandwiched therebetween, and diffusion layers that are formed on the catalyst layers, wherein
the catalyst layers comprise a first composite catalyst particle containing a catalyst-supporting particle and a solid polymer electrolyte, and a second composite catalyst particle, which contains a catalyst-supporting particle and a solid polymer electrolyte and has a larger volume average particle diameter than the first composite catalyst particle, and
an arrangement of the first composite catalyst particle and the second composite catalyst particle is controlled in a thickness direction through the catalyst layer.

5. The fuel cell according to claim 4, wherein
a layer containing the first composite catalyst particle is disposed on a side of the electrolyte membrane, and a layer containing the second composite catalyst particle is disposed on a side of the diffusion layer.

6. The fuel cell according to claim 4, wherein
a volume average particle diameter of the first composite catalyst particle is within a range from 0.5 to 8 µm, and a volume average particle diameter of the second composite catalyst particle is within a range from 5 to 20 µm.

7. A method for manufacturing a fuel cell comprising an assembly for a fuel cell, in which catalyst layers are formed so as to face one another across an electrolyte membrane sandwiched therebetween, and diffusion layers that are formed on the catalyst layers, wherein the catalyst layers comprise a first composite catalyst particle containing a catalyst-supporting particle and a solid polymer electrolyte, and a second composite catalyst particle, which contains a catalyst-supporting particle and a solid polymer electrolyte and has a larger volume average particle diameter than the first composite catalyst particle, and
an arrangement of the first composite catalyst particle and the second composite catalyst particle is controlled in a thickness direction through the catalyst layer.

8. The method for manufacturing a fuel cell according to claim 7, comprising:
forming a first catalyst layer comprising the first composite catalyst particle on at least one surface of the electrolyte
membrane, and
forming a second catalyst layer comprising the second composite catalyst particle on top of the first catalyst layer.

9. The method for manufacturing a fuel cell according to claim 7, comprising:
forming a second catalyst layer comprising the second composite catalyst particle on one surface of the diffusion layer, and
forming a first catalyst layer comprising the first composite catalyst particle on top of the second catalyst layer.

10. The method for manufacturing a fuel cell according to claim 7, wherein
the first composite catalyst particle and the second composite catalyst particle are obtained by a method comprising:
a slurry preparation step of preparing at least one slurry by mixing a catalyst-supporting particle, a solid polymer electrolyte and a solvent,
a first spray drying step of forming the first composite catalyst particle comprising the catalyst-supporting particle and the solid polymer electrolyte by spray drying the slurry, and
a second spray drying step of forming the second composite catalyst particle comprising the catalyst-supporting particle and the solid polymer electrolyte and having a larger volume average particle diameter than the first composite catalyst particle by spray drying the slurry.

11. The method for manufacturing a fuel cell according to claim 7, wherein
the first composite catalyst particle and the second composite catalyst particle are obtained by a method comprising:
a slurry preparation step of preparing a slurry by mixing a catalyst-supporting particle, a solid polymer electrolyte and a solvent,
a spray drying step of forming, by spray drying the slurry, the first composite catalyst particle comprising the catalyst-supporting particle and the solid polymer electrolyte, and the second composite catalyst particle comprising the catalyst-supporting particle and the solid polymer electrolyte and having a larger volume average particle diameter than the first composite catalyst particle, and
a classification step of classifying the first composite catalyst particle and the second composite catalyst particle.
